# EUROPEAN PATENT APPLICATION

(11) **EP 4 177 782 A1**
(43) Date of publication of application: **10.05.2023**
(21) Application number: 21832323.6
(22) Date of filing: 01.06.2021
(51) Int. Cl.: G06F 40/109

(54) **FONT ADJUSTMENT METHOD AND APPARATUS, STORAGE MEDIUM, AND ELECTRONIC DEVICE**

(30) Priority: 03.07.2020 CN 202010636473
(71) Applicant: GUANGDONG OPPO MOBILE TELECOMMUNICATIONS CORP., LTD., Dongguan, Guangdong 523860 (CN)
(72) Inventor: JI, Yidong, Dongguan, Guangdong 523860 (CN); DENG, Tonghu, Dongguan, Guangdong 523860 (CN); KONG, Fanxiu, Dongguan, Guangdong 523860 (CN)
(74) Representative: Taor, Simon Edward William
(86) International application number: PCT/CN2021/097635
(87) International publication number: WO 2022/001553

(57) **Abstract**

Provided are a font adjustment method, a font adjustment apparatus, a storage medium, and an electronic device. The font adjustment method includes: obtaining an application currently running on an electronic device (102); determining a display type of the application from a predetermined correspondence relation, the predetermined correspondence relation including part or all of applications in the electronic device and corresponding display types (102); determining font weight setting information of the display type (103); and adjusting, based on the font weight setting information, a font in a display interface of the application (104).

## Description

The present disclosure claims priorities to Chinese Patent Application No. 202010636473.6, filed on July 3, 2020 and entitled "FONT ADJUSTMENT METHOD AND APPARATUS, STORAGE MEDIUM, AND ELECTRONIC DEVICE", the entire disclosure of which is incorporated herein by reference.

### FIELD

The present disclosure relates to the technical field of font adjustment, and particularly, to a font adjustment method and apparatus, a storage medium, and an electronic device.

### BACKGROUND

Variable Fonts technology is derived from an OpenType V 1.8 font format specification published by Adobe, Apple, Google, Microsoft, etc. in 2016. This published specification allows a single font file to simultaneously support a plurality of font forms. Several fonts can be compactly included in the single font file, to achieve a single-axis font weight design space by defining changes in the font.

However, in a current stage, it is still a common practice in the industry to change a font weight of variable fonts, only allowing a user to customize a width and some changes of interaction details, without noticing the fact that the user may have different feelings about the same font weight in different scenes. For example, a white font in a dark mode appears thicker than a black font in a non-dark mode with the same font weight, thereby destroying a visual balance. Thus, such a font adjustment is not flexible and intelligent enough.

### SUMMARY

The present disclosure provides a font adjustment method and apparatus, a storage medium, and an electronic device, which can automatically adjust a font weight based on an application type to improve flexibility of a font adjustment.

In a first aspect, embodiments of the present disclosure provide a font adjustment method. The font adjustment method includes: obtaining an application currently running on an electronic device; determining a display type of the application based on a predetermined correspondence relation between part or all of applications in the electronic device and corresponding display types; determining font weight setting information of the display type; and adjusting, based on the font weight setting information, a font in a display interface of the application.

In a second aspect, the embodiments of the present disclosure provide a font adjustment apparatus. The font adjustment apparatus includes: an obtaining module configured to obtain an application currently running on an electronic device; a first determining module configured to determine a display type of the application based on a predetermined correspondence relation between part or all of applications in the electronic device and corresponding display types; a second determining module configured to determine font weight setting information of the display type; and an adjusting module configured to adjust, based on the font weight setting information, a font in a display interface of the application.

In a third aspect, the embodiments of the present disclosure provide a storage medium, having a computer program stored thereon. The computer program, when running on a computer, causes the computer to execute the font adjustment method as described above.

In a fourth aspect, the embodiments of the present disclosure provide an electronic device. The electronic device includes a processor and a memory storing a plurality of instructions. The processor is configured to, by loading the plurality of instructions in the memory, implement steps of: obtaining an application currently running on an electronic device; determining a display type of the application based on a predetermined correspondence relation between part or all of applications in the electronic device and corresponding display types; determining font weight setting information of the display type; and adjusting, based on the font weight setting information, a font in a display interface of the application.

### BRIEF DESCRIPTION OF THE DRAWINGS

In order to clearly explain technical solutions of embodiments of the present disclosure, drawings used in description of embodiments are briefly described below. Obviously, the drawings as described below are merely some embodiments of the present disclosure. Based on these drawings, other drawings can be obtained by those skilled in the art without creative effort.
FIG. 1 is a schematic flowchart of a font adjustment method according to an embodiment of the present disclosure.
FIG. 2 is another schematic flowchart of a font adjustment method according to an embodiment of the present disclosure.
FIG. 3 is a schematic diagram illustrating a scene of a font adjustment method according to an embodiment of the present disclosure.
FIG. 4 is a schematic structural diagram of a font adjustment apparatus according to an embodiment of the present disclosure.
FIG. 5 is another schematic structural diagram of a font adjustment apparatus according to an embodiment of the present disclosure.
FIG. 6 is a schematic structural diagram of an electronic device according to an embodiment of the present disclosure.
FIG. 7 is another schematic structural diagram of an electronic device according to an embodiment of the present disclosure.

### DETAILED DESCRIPTION

Referring to the drawings, same symbols represent same components. The principles of the present disclosure are illustrated by examples by implementing in an appropriate computing environment. The following description is based on specific embodiments of the present disclosure as illustrated, which should not be regarded as limiting other specific embodiments that are not described in detail in the present disclosure.

In the following description, specific embodiments of the present disclosure are described with reference to actions executed by one or more computers and symbols, unless otherwise stated. Therefore, there are several references to the fact that these actions and operations are executed by a computer. The computer execution mentioned herein includes an operation of a computer processing unit that represents an electronic signal of data in a structured version. Such an operation translates the data or maintains the data at a position in a memory system of the computer, which may be reconfigured or otherwise change an operation of the computer in a manner well known to those skilled in the art. A data structure maintained by the data is a physical position of the memory, which has specific characteristics defined by a data format. However, the above description of the principles of the present disclosure does not constitutes a limitation. Those skilled in the art can understand that the various actions and operations described below may also be implemented in hardware.

It should be noted that terms "first", "second" and "third" in the present disclosure are used to distinguish different objects, rather than to describe a specific sequence. In addition, terms "including", "comprising" and "having" and any variations thereof indicate non-exclusive inclusions. For example, a process, a method, a system, a product, or a device that includes a series of actions or modules is not necessarily limited to those clearly listed actions or modules. However, some embodiments may further include other actions or modules that are not clearly listed or may further include other actions or modules that are inherent to the process, the method, the product, or the device.

Embodiments of the present disclosure provide a font adjustment method. The method includes: obtaining an application currently running on an electronic device; determining a display type of the application based on a predetermined correspondence relation between part or all of applications in the electronic device and corresponding display types; determining font weight setting information of the display type; and adjusting, based on the font weight setting information, a font in a display interface of the application.

In an embodiment, the font weight setting information includes body font weight setting information and title font weight setting information. Said adjusting, based on the font weight setting information, the font in the display interface of the application includes: dividing writing in the display interface of the application into a body and a title; adjusting a font of the body based on the body font weight setting information; and adjusting a font of the title based on the title font weight setting information.

In an embodiment, said dividing the writing in the display interface of the application into the body and the title includes: obtaining a label of the writing in the display interface of the application; and dividing, based on the label, the writing in the display interface into the body and the title.

In an embodiment, after said adjusting, based on the font weight setting information, the font in the display interface of the application, the method further includes: receiving a user operation, and selecting, based on the user operation, a target text in the display interface of the application; and increasing a font weight value of the target text by a first value.

In an embodiment, after said adjusting, based on the font weight setting information, the font in the display interface of the application, the method further includes: determining whether the electronic device is switched to a dark mode; and reducing, in response to determining that the electronic device is switched to the dark mode, a font weight value of writing in the display interface of the application by a second value.

In an embodiment, subsequent to said determining the font weight setting information of the display type, the method further includes: determining whether the electronic device is switched to a simple mode; adjusting, in response to determining that the electronic device is not switched to the simple mode, the font in the display interface of the application based on the font weight setting information of the display type; and determining, in response to determining that the electronic device is switched to the simple mode, font weight setting information corresponding to the simple mode, and adjusting, based on the font weight setting information corresponding to the simple mode, the font in the display interface of the application.

In an embodiment, after said obtaining the application currently running on the electronic device, the method further includes: determining whether the application is a predetermined application; and performing, in response to determining that the application is not the predetermined application, said determining the display type of the application from the predetermined correspondence relation.

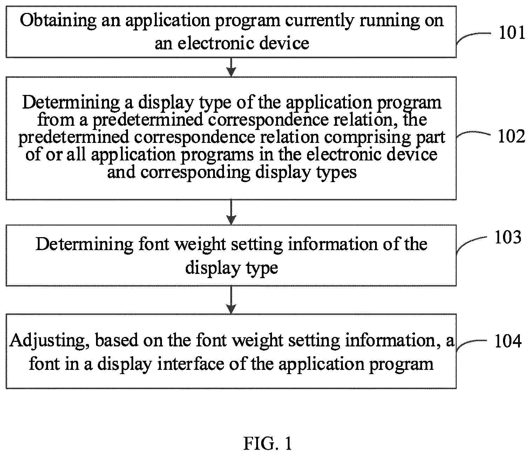

FIG. 1 is a schematic flowchart of a font adjustment method according to an embodiment of the present disclosure. The font adjustment method provided in the embodiment of the present disclosure is applied to an electronic device. The method includes the following specific actions in blocks.

At block 101, the application, which is currently running on the electronic device, is obtained.

In an embodiment, a background application is not displayed on a display screen of the electronic device and thus does not need to perform font weight adjustment. Therefore, the above-mentioned application may be an application running in a foreground of the electronic device. That is, the above-mentioned application is a running foreground application presented to the user, allowing the user to perform an interactive operation. In an embodiment, the application may be detected by detecting a process of the application. For example, when it is detected that a network video application is in a running process, a currently running foreground application is detected to be the network video application.

In an embodiment, after obtaining the currently running application, it is further determined whether the application is the predetermined application. The predetermined application may be some applications predetermined in the electronic device and having no font weight adjustment requirement, for example, some applications requiring high font accuracy. The predetermined application may be set by the user, or it may be set by a developer through a system. The predetermined application can be added and deleted by the user. When the current application is not the predetermined application, action in block 102 is performed again. When the current application is the predetermined application, a current process can be stopped.

In an embodiment, the currently running application of the electronic device may be one or more applications. For example, when the electronic device initiates a split-screen function, interfaces of two or more application may be simultaneously displayed on the display screen. However, these split-screen applications are all the foreground applications. In this case, an obtained currently running application of the electronic device is a plurality of split-screen applications. Further, in a subsequent font adjustment process, subsequent actions are also required to be performed for these applications, respectively, to respectively adjust the font in the display interfaces of the corresponding applications.

At block 102, the display type of the application is determined from the predetermined correspondence relation. The predetermined correspondence relation includes part or all of applications in the electronic device and the corresponding display types.

In the embodiment of the present disclosure, the correspondence relation may be predetermined in an electronic device system. The predetermined correspondence relation includes part or all of applications in the electronic device and the corresponding display types. The display types may be divided into three categories, i.e., a system type, a reading type, and a prompt type. The display types may also be classified in advance or classified by the system based on user preferences.

In order to further improve applicability of the present disclosure, the application in the predetermined correspondence relation as described above can further include all applications in an application market. For example, after obtaining the application currently running on the electronic device, the application may be compared in the predetermined correspondence relation as described above based on application identification. Then, a display type corresponding to the application identification may be found. The above-mentioned application identification may be a name of the application.

Since many applications on the market belong to the same application type, such as a video type, a music type, a news type, a photography type, etc., the predetermined correspondence relation in an embodiment may further include an application type and a corresponding display type. In this case, after obtaining the application currently running on the electronic device, an application type of the application may also be obtained, and then compared in the predetermined correspondence relation based on the application type. Then, a display type corresponding to the type is found. In this way, it is unnecessary to establish a correspondence relation between each application and the display type, and accordingly, a memory usage of the database of the correspondence relation can be reduced.

For example, the display types of the application are first classified into the system type, the reading type, and the prompt type. A font of the system type has higher requirements on font stringency and universality, and thus it is suitable for uses in a multi-dimensional scene such as a system, tool, financial applications, etc., such a video application, a photography application, a social application, a music application, and a life application, etc. Therefore, the above application type can be categorized as a system display type. A font of the reading type has higher requirements on comfort, permeability, font flow feeling, and has higher air feeling requirements. Thus, the font of the reading type can be preferably used in an immersive font usage scenario, for uses in a note application or a reading type application, such as an electronic book application, a news application, a cartoon application, and the like. Therefore, the above application type can be categorized as a reading display type. Further, a font of the prompt type has higher requirements on a recognition degree and definition, which focuses on a font prompt function and requires a clear character pattern. Thus, the font of the prompt type is suitable for uses in mobile phone manager, map navigation, traffic violation applications, such as a navigation application, a security application, etc. Therefore, the above application type may be can be categorized as a prompt display type.

At block 103, the font weight setting information of the display type is determined.

In an embodiment, the corresponding font weight setting information is predetermined for each display type. The font weight setting information may be a set font weight value. For example, when it is determined that the display type of the application is a system display type, the font weight value corresponding to the system display type is 320. When it is determined that the display type of the application is the reading display type, the font weight value corresponding to the reading display type is 270. When it is determined that the display type of the application is the prompt display type, the font weight value corresponding to the prompt display type is 360.

Further, the font weight value corresponding to each display type may also be adjusted by the user. For example, an initial value, which is a system setup, for the font weight value corresponding to the system display type is 320, and the user may change the initial value to 330.

In an embodiment, considering that writing included in a display interface of a general application may further include different types, for example, body and title, with the above font weight setting information, the body font and the title font may be set respectively. The title font may be set based on the body font. For example, a font weight value of the title font can be calculated by adding a predetermined value to a font weight value of the body font. As an example, the font weight value of the body font corresponding to the system display type may be 320, and the above predetermined value is set to be 80, such that the font weight value of title characters is calculated to be 400. It can be understood that the font weight setting information may further used to set the font weight value of the title characters, and thus the font weight value of body characters can be calculated by subtracting the predetermined value from the font weight value of the title characters.

At block 104, the font in the display interface of the application is adjusted based on the font weight setting information.

In an embodiment, the font weight values of the writing in the display interface of the application are all determined based on the font weight setting information. Thus, a font of a corresponding font weight can be invoked for each writing, thereby completing the font adjustment. In an embodiment, the font weight values of the body font and title font in the display interface of the application may be determined, respectively, and the font of the corresponding font weight is invoked for the body characters, as well as the font of the corresponding font weight is invoked for the title characters.

In actual use, the electronic device may further have a simple mode, also known as an elderly-user mode, which is mainly used by the middle-aged and elderly users whose eyesight can hardly recognize thin and small fonts. Therefore, for such special group of people, the embodiments of the present disclosure may allow the font itself to be adjusted, and a simple mode type may be provided for this special group of people. In an embodiment, once an activation of the simple mode of the electronic device is detected, the font in the display interface is required to be immediately adjusted based on the font weight setting information corresponding to the simple mode type, regardless of what application is currently running on the electronic device. That is, the font weight setting information corresponding to the simple mode type is applied in display interfaces of all applications. When it is determined that the electronic device is currently switched to the simple model, the font weight setting information corresponding to the simple mode type is determined. For example, a font weight value corresponding to the font weight setting information is 320. The font is adjusted based on the font weight value. That is, after the font weight setting information of the display type is determined, the method further includes: determining whether the electronic device is switched to a simple mode; adjusting, in response to determining that the electronic device is not switched to the simple mode, the font in the display interface of the application based on the font weight setting information of the display type; and determining, in response to determining that the electronic device is switched to the simple mode, font weight setting information corresponding to the simple mode, and adjusting, based on the font weight setting information corresponding to the simple mode, the font in the display interface of the application.

It can be learned from the above that, in the font adjustment method provided in the embodiments of the present disclosure, the application currently running on the electronic device can be obtained, and the display type of the application can be determined from the predetermined correspondence relation. The predetermined correspondence relation includes part or all of applications in the electronic device and the corresponding display types. The font weight setting information of the display type is determined. The font in the display interface of the application is adjusted based on the font weight setting information. In the embodiments of the present disclosure, by identifying the display type of the currently running application and adjusting, based on the font weight setting information, the font in the display interface of the application corresponding to the display type, the font adjustment can have an enhanced flexibility.

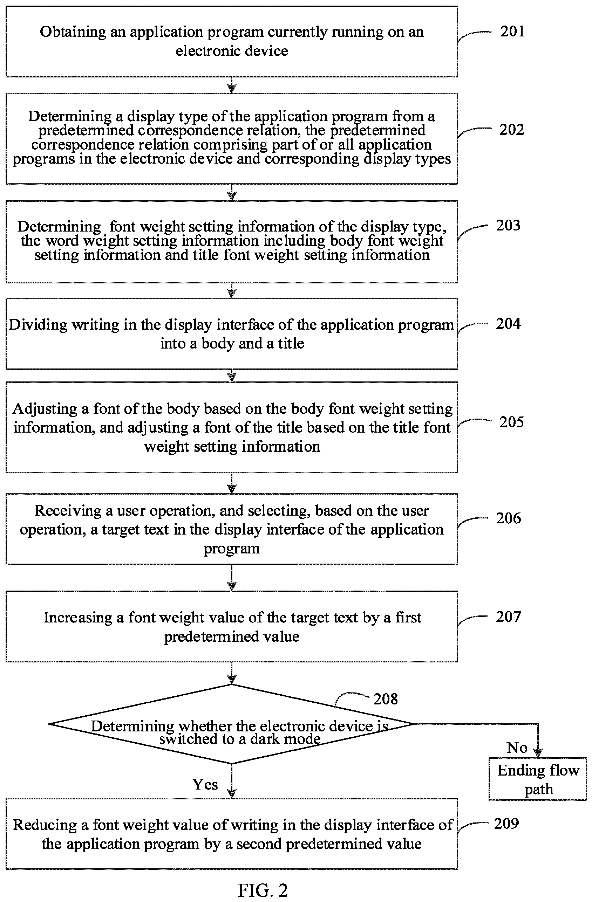

The font adjustment method of the present disclosure is further described below based on the method described in the above embodiments. FIG. 2 is another schematic flowchart of a font adjustment method according to an embodiment of the present disclosure. Referring to FIG. 2, the font adjustment method includes the following actions in blocks.

At block 201, the application currently running on the electronic device is obtained.

The above-mentioned application may be the application running in the foreground of the electronic device. That is, the above-mentioned application is a running foreground application presented to the user, allowing the user to perform an interactive operation. In an embodiment, the application may be detected by detecting a process of the application.

At block 202, the display type of the application is determined from the predetermined correspondence relation. The predetermined correspondence relation includes part or all of applications in the electronic device and the corresponding display types.

In the embodiment of the present disclosure, the correspondence relation may be predetermined in an electronic device system. The predetermined correspondence relation includes part or all of applications in the electronic device and the corresponding display types. The display types may be divided into three categories, i.e., a system type, a reading type, and a prompt type, respectively.

At block 203, the font weight setting information of the display type is determined. The font weight setting information includes body font weight setting information and title font weight setting information.

In an embodiment, the corresponding font weight setting information is predetermined for each display type. The font weight setting information may be a set font weight value. For example, when it is determined that the display type of the application is a system display type, the font weight value of the body font is 320 and the font weight value of the title font is 400. When it is determined that the display type of the application is a reading display type, the font weight value of the body font is 270 and the font weight value of the title font is 350. When it is determined that the display type of the application is a prompt display type, the font weight value of the body font is 360 and the font weight value of the title font is 440.

At block 204, the writing in the display interface of the application is divided into a body and a title

At block 205, the font of the body is adjusted based on the body font weight setting information, and the font of the title is adjusted based on the title font weight setting information.

In an embodiment, the body and the title may be divided based on the label of the writing in the display interface of the application. The font of the corresponding font weight is invoked for the body characters, and the font of the corresponding font weight is invoked for the title characters, thereby completing the font adjustment.

At block 206, the user operation is received, and the target text in the display interface of the application is selected based on the user operation.

At block 207, the font weight value of the target text is increased by a first value.

In an embodiment, the font may also be bolded based on the user operation. As an example, the user operation may be first received to select the target text in the display interface. For example, the target text is selected based on the user's sliding tracks on a display screen, and the corresponding font weight value is set for the target text. As an example, when a font weight value of the target text after font adjustment in step 205 is 320, the font weight value of the target text can be increased by 80, i.e., reaching 400. The font of the corresponding font weight may be invoked to complete a bolding of the target text.

In an embodiment, the user operation may include a first user operation and a second user operation. For example, the first user operation is a sliding operation, and the second user operation is a pressing operation. In this way, the target text can be determined based on the sliding tracks of the sliding operation, and an instruction for adjusting the font weight can be generated based on the pressing operation. Therefore, mistaken touch can be avoided.

At block 208, it is determined whether the electronic device is switched to the dark mode; and when it is determined that the electronic device is switched to the dark mode, action in block 209 is executed.

At block 209, the font weight value of the writing in the display interface of the application is reduced by a second value.

The Applicant also found that a white font with the same font weight in a dark mode may appear thicker. Therefore, in the embodiments of the present disclosure, when the user switches to the dark mode, the font weight is correspondingly and automatically reduced through an adaptive font engine, thereby keeping a visual balance of the font weight in a normal mode and the white-reserve dark mode.

As an example, the font of the body may be adjusted based on the body font weight setting information in the embodiment of the present disclosure. After the font of the title is adjusted based on the title font weight setting information, it is determined whether the electronic device is switched to the dark mode. When it is determined that the electronic device is not in the dark mode, a current process may be ended. When it is determined that the electronic device is switched to the dark mode, the font weight value of the writing in the display interface of the application may be reduced by the second value.

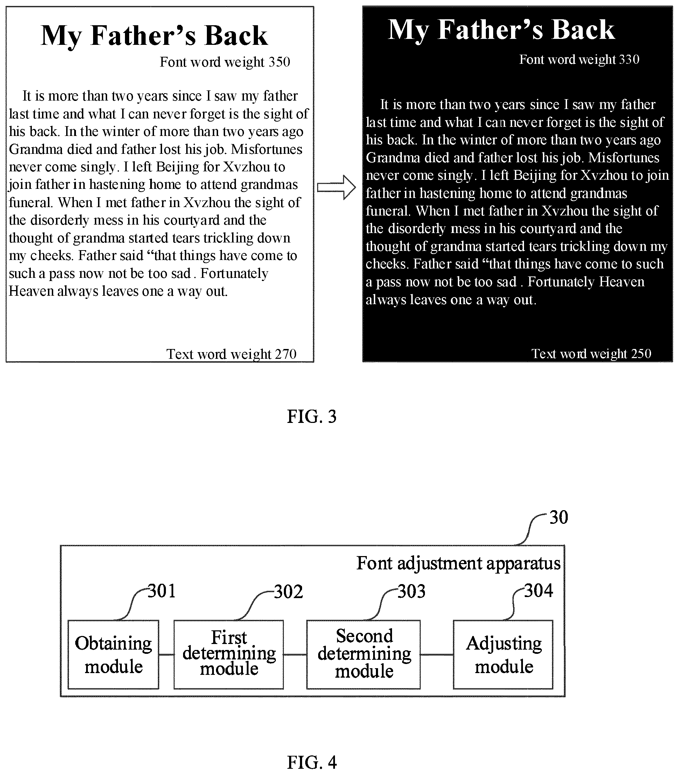

FIG. 3 is a schematic diagram illustrating a scene of a font adjustment method according to an embodiment of the present disclosure. For example, as illustrated in FIG. 3, in this embodiment, the application currently running on the electronic device is an electronic book application, i.e., "XX reading". Therefore, a display type corresponding to the application is determined to be the reading display type. The font weight setting information of the reading display type is thus obtained, including the font weight value of the body font of 270, and the font weight value of the title font of 350. The title and body are presented after the font adjustment is completed. Further, when the user activates the dark mode of the electronic device, the font in the display interface is further adjusted. As an example, the font weight values of the body font and title font are reduced by 20, respectively. That is, the font weight value of the body font is reduced to 250, and the font weight value of the title font is reduced to 330, based on which an adjustment for the dark mode is performed.

In view of the above, in the font adjustment method provided in the embodiments of the present disclosure, the application currently running on the electronic device can be obtained, and the display type of the application can be determined from the predetermined correspondence relation. The predetermined correspondence relation includes part or all of applications in the electronic device and the corresponding display types. The font weight setting information of the display type is determined, and the font weight setting information includes the body font weight setting information and the title font weight setting information. The writing in the display interface of the application is divided into the body and the title. The font of the body is adjusted based on the body font weight setting information, and the font of the title is adjusted based on the title font weight setting information. The font weight value of the target text is increased by the first value. It is determined whether the electronic device is switched to the dark mode. When it is determined that the electronic device is switched to the dark mode, the font weight value of the writing in the display interface of the application is reduced by the second value. In the embodiments of the present disclosure, by identifying the display type of the currently running application and adjusting, based on the font weight setting information, the font in the display interface of the application corresponding to the display type, the font adjustment can have an enhanced flexibility.

FIG. 4 is a schematic structural diagram of a font adjustment apparatus according to an embodiment of the present disclosure. Referring to FIG. 4, the font adjustment apparatus 30 includes an obtaining module 301, a first determining module 302, a second determining module 303, and an adjusting module 304.

The obtaining module 301 is configured to obtain an application currently running on an electronic device.

The first determining module 302 is configured to determine a display type of the application based on a predetermined correspondence relation between part or all of applications in the electronic device and corresponding display types.

The second determining module 303 is configured to determine font weight setting information of the display type.

The adjusting module 304 is configured to adjust, based on the font weight setting information, a font in a display interface of the application.

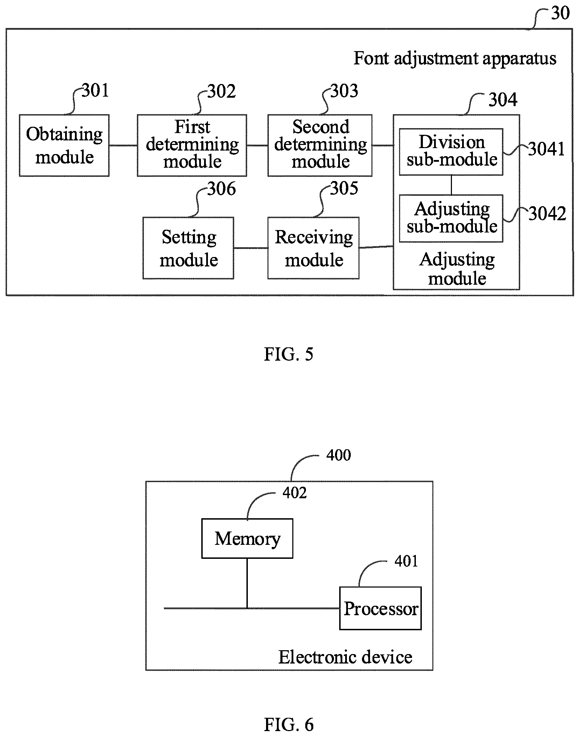

In an embodiment, referring to FIG. 5, in this embodiment, the font weight setting information includes body font weight setting information and title font weight setting information. The adjusting module 304 includes a division sub-module 3041 and an adjusting sub-module 3042.

The division sub-module 3041 is configured to divide writing in the display interface of the application into a body and a title.

The adjusting sub-module 3042 is configured to: adjust a font of the body based on the body font weight setting information; and adjust a font of the title based on the title font weight setting information.

In an embodiment, the division sub-module is specifically configured to: obtain a label of the writing in the display interface of the application; and divide, based on the label, the writing in the display interface into the body and the title.

In an embodiment, the font adjustment apparatus 30 further includes a receiving module 305 and a setting module 306.

The receiving module 305 is configured to, after the font in the display interface of the application is adjusted by the adjusting module based on the font weight setting information: receive a user operation, and select, based on the user operation, a target text in the display interface of the application.

The setting module 306 is configured to increase a font weight value of the target text by a first value.

In an embodiment, the apparatus further includes a first judgement module and a first processing module.

The first judgement module is configured to, after the font in the display interface of the application is adjusted by the adjusting module based on the font weight setting information: determine whether the electronic device is switched to a dark mode.

The first processing module is configured to, when the first judgement module determines that the electronic device is switched to the dark mode: reduce a font weight value of writing in the display interface of the application by a second value.

In an embodiment, the apparatus further includes a second judgement module configured to, after the font weight setting information of the display type is determined by the second determining module: determine whether the electronic device is switched to a simple mode. The adjusting module is specifically configured to: when the second judgement module determines that the electronic device is not switched to the simple mode, adjust the font in the display interface of the application based on the font weight setting information of the display type; and when the second judgement module determines that the electronic device is switched to the simple mode, determine font weight setting information corresponding to the simple mode, and adjust, based on the font weight setting information corresponding to the simple mode, the font in the display interface of the application.

In an embodiment, the first determining module is specifically configured to, after the application currently running on the electronic device is obtained: determine whether the application is a predetermined application; and determine, when it is determined that the application is not the predetermined application, the display type of the application from the predetermined correspondence relation.

In view of the above, the font adjustment apparatus 30 provided in the embodiments of the present disclosure can obtain the application currently running on the electronic device and determine the display type of the application from the predetermined correspondence relation. The predetermined correspondence relation includes part or all of applications in the electronic device and the corresponding display types. The font weight setting information of the display type can be determined. The font in the display interface of the application is adjusted based on the font weight setting information. In the embodiments of the present disclosure, by identifying the display type of the currently running application and adjusting, based on the font weight setting information, the font in the display interface of the application corresponding to the display type, the font adjustment can have an enhanced flexibility.

In the embodiments of the present disclosure, the font adjustment apparatus and the font adjustment method in the above embodiments belong to the same concept. The method provided in any one of the embodiments of the font adjustment method may be run on the font adjustment apparatus. The specific implementations of the apparatus can refer to the embodiments of the font adjustment method, which are not described in detail herein again.

The term "module" as used herein may be regarded as a software object executed on a computing system. Different components, modules, engines, and services described herein may be regarded as implementation objects on the computing system. The apparatus and method described herein may be implemented in a form of software manner, or certainly, they may also be implemented on hardware, which shall all fall within the protection scope of the present disclosure.

The embodiments of the present disclosure further provide a storage medium having a computer program stored thereon. The computer program, when running on a computer, causes the computer to execute the font adjustment method as described above.

The embodiments of the present disclosure further provide an electronic device, such as a tablet computer, and a mobile phone, etc. The electronic device includes a processor and a memory having a plurality of instructions stored thereon. The processor is configured to, by loading the plurality of instructions in the memory: obtain an application currently running on an electronic device; determine a display type of the application based on a predetermined correspondence relation between part or all of applications in the electronic device and corresponding display types; determine font weight setting information of the display type; and adjust, based on the font weight setting information, a font in a display interface of the application.

In an embodiment, the font weight setting information includes body font weight setting information and title font weight setting information. When adjusting, based on the font weight setting information, the font in the display interface of the application, the processor is configured to: divide writing in the display interface of the application into a body and a title; adjust a font of the body based on the body font weight setting information; and adjust a font of the title based on the title font weight setting information.

In an embodiment, the processor is further configured to, after said adjusting, based on the font weight setting information, the font in the display interface of the application: receive a user operation, and select, based on the user operation, a target text in the display interface of the application; and increase a font weight value of the target text by a first value.

In an embodiment, the processor is further configured to, after said adjusting, based on the font weight setting information, the font in the display interface of the application: determine whether the electronic device is switched to a dark mode; and reduce, in response to determining that the electronic device is switched to the dark mode, a font weight value of writing in the display interface of the application by a second value.

In an embodiment, the processor is further configured to, subsequent to said determining the font weight setting information of the display type: determine whether the electronic device is switched to a simple mode; adjust, in response to determining that the electronic device is not switched to the simple mode, the font in the display interface of the application based on the font weight setting information of the display type; and determine, in response to determining that the electronic device is switched to the simple mode, font weight setting information corresponding to the simple mode, and adjust, based on the font weight setting information corresponding to the simple mode, the font in the display interface of the application.

Reference herein to "an embodiment" means that specific features, structures, or characteristics described in combination with the embodiments may be included in at least one embodiment of the present disclosure. Appearances of the phrase "an embodiment in the specification are neither necessarily referring to the same embodiment, nor separate or alternative embodiments mutually exclusive of other embodiments. It explicitly and implicitly indicates to those skilled in the art that the embodiments described herein may be combined with other embodiments.

Referring to FIG. 6, the electronic device 400 includes a processor 401 and a memory 402. The processor 401 is electrically connected to the memory 402.

The processor 400 is a control center of the electronic device 400, and is connected to each part of the entire electronic device through various interfaces and circuits. The processor 401 performs various functions of the electronic device 400 and processes data by running or loading computer programs stored in the memory 402 and invoking data stored in the memory 402, thereby monitoring the electronic device 400 as a whole.

The memory 402 may be configured to store software programs or modules. The processor 401 is configured to execute various functional applications and data processes by running the computer programs and modules stored in the memory 402. The memory 402 may mainly include a program storage region and a data storage region. The program storage region may store an operation system, at least one function-required computer program (such as a program having a sound playing function, a program having an image playing function) and the like. The data storage region may store data produced by using the electronic device. In addition, the memory 402 may include a high-speed random-access memory and a non-volatility memory, such as at least one disk memory, a flash memory, or other volatility solid state memory. The memory 402 may further include a memory controller to provide access to the memory 402 by the processor 401.

In the embodiments of the present disclosure, the processor 401 in the electronic device 400 loads instructions corresponding to processes of one or more computer programs into the memory 402 based on the following steps. The processor 401 executes the computer program stored in the memory 402, to implement the following various functions: obtaining an application currently running on an electronic device; determining a display type of the application based on a predetermined correspondence relation between part or all of applications in the electronic device and corresponding display types; determining font weight setting information of the display type; and adjusting, based on the font weight setting information, a font in a display interface of the application.

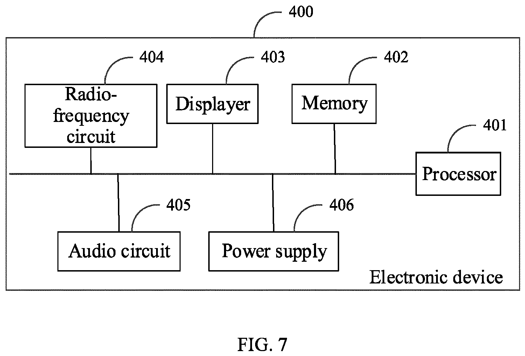

Referring to FIG. 7, in some embodiment, the electronic device 400 may further include a display 403, a radio-frequency circuit 404, an audio-frequency circuit 405, and a power supply 406. The display 403, the radio-frequency circuit 404, the audio-frequency circuit 405, and the power supply 406 are each electrically connected to the processor 401.

The display 403 can be configured to display information inputted by the user or information provided to the user or various graphical user interfaces. These graphical user interfaces may be composed of graphics, text, icons, video, and any combination thereof. The display unit 403 may include a display panel. As an example, the display panel may be configured as forms like a Liquid Crystal Display (LCD), or an Organic Light-Emitting Diode (OLED) and the like.

The radio-frequency circuit 404 can be configured to receive and transmit a frequency signal, to establish wireless communication with a network device or other electronic devices through wireless communication, and receive and transmit a signal with the network device or other electronic devices. Generally, the radio-frequency circuit 501 includes, but is not limited to, an antenna, at least one amplifier, a tuner, one or more oscillators, a Subscriber Identity Module (SIM) card, a transceiver, a coupler, a Low Noise Amplifier (LNA), a duplexer, etc.

The audio-frequency circuit 405 can be configured to provide an audio interface between the user and the electronic device through a speaker and a microphone. The audio-frequency circuit 506 may convert received audio data into an electrical signal, transmit the electrical signal to the speaker. The electrical signal is converted into a sound signal by the speaker to be output.

The power supply 406 can be configured to power on the respective components of the electronic device 400. In some embodiments, the power supply 406 may be logically connected to the processor 401 through a power management system, to implement functions such as charging, discharging, and power consumption management through the power management system. The power supply 406 may further include any components such as one or more direct current or alternating current power supplies, a recharging system, a power failure detection circuit, a power converter or an inverter, a power status indicator, etc.

The electronic device 400 may further include a camera, and a Bluetooth module, etc., which are not illustrated in FIG. 7 and not described in detail herein.

In the embodiments of the present disclosure, the storage medium may be a magnetic disk, a compact disc (CD), a Read Only Memory (ROM), a Random Access Memory (RAM), or the like.

In the above embodiments, the description of each embodiment has its own emphasis. For a part that is not described in detail in an embodiment, reference may be made to related descriptions in other embodiments.

It should be noted that, for the font adjustment method in the embodiments of the present disclosure, those skilled in the art can understand that all or part of the processes of the font adjustment method in the embodiments of the present disclosure may be implemented by using the computer program to control related hardware. The computer program may be stored in a computer-readable storage medium. For example, the computer program is stored in the memory of the electronic device and executed by at least one processor in the electronic device. The computer program, when being executed, may include the process of the font adjustment method embodiments. The storage medium may be the magnetic disk, the CD, the ROM, the RAM, etc.

For the font adjustment apparatus in the embodiments of the present disclosure, the respective function modules thereof may be integrated in a processing chip, or each module may be separate physical existence, or two or more modules are integrated in one module. The integrated module may be implemented in a form of hardware or in a form of software function module. When the integrated module is implemented in the form of software function module and is sold or used as a standalone product, the integrated module may be stored in the computer readable storage medium. For example, the storage medium may be a read-only memory, the magnetic disk, the CD, etc.

The above provides detailed description of the font adjustment method and apparatus, the storage medium, and the electronic device according to the embodiments of the present disclosure. Specific examples are intended to illustrate the principles and implementations of the present disclosure. The description of the above embodiments is only used to facilitate understanding of the method and a core concept of the present disclosure. In addition, those skilled in the art, based on the concept of the present disclosure, can make changes to these specific implementations and the application range. In summary, the content of the specification should not be construed as a limitation to the present disclosure.

## Claims

1. A font adjustment method, comprising.
obtaining an application currently running on an electronic device;
determining a display type of the application based on a predetermined correspondence relation between part or all of application in the electronic device and corresponding display types;
determining font weight setting information of the display type; and
adjusting, based on the font weight setting information, a font in a display interface of the application.

2. The font adjustment method according to claim 1, wherein the font weight setting information comprises body font weight setting information and title font weight setting information, and wherein said adjusting, based on the font weight setting information, the font in the display interface of the application comprises:
dividing writing in the display interface of the application into a body and a title;
adjusting a font of the body based on the body font weight setting information; and
adjusting a font of the title based on the title font weight setting information.

3. The font adjustment method according to claim 2, wherein said dividing the writing in the display interface of the application into the body and the title comprises:
obtaining a label of the writing in the display interface of the application; and
dividing, based on the label, the writing in the display interface into the body and the title.

4. The font adjustment method according to claim 1, further comprising, subsequent to said adjusting, based on the font weight setting information, the font in the display interface of the application:
receiving a user operation, and selecting, based on the user operation, a target text in the display interface of the application; and
increasing a font weight value of the target text by a first value.

5. The font adjustment method according to claim 1, further comprising, subsequent to said adjusting, based on the font weight setting information, the font in the display interface of the application:
determining whether the electronic device is switched to a dark mode; and
reducing, in response to determining that the electronic device is switched to the dark mode, a font weight value of writing in the display interface of the application by a second value.

6. The font adjustment method according to claim 1, further comprising, subsequent to said determining the font weight setting information of the display type:
determining whether the electronic device is switched to a simple mode;
adjusting, in response to determining that the electronic device is not switched to the simple mode, the font in the display interface of the application based on the font weight setting information of the display type; and
determining, in response to determining that the electronic device is switched to the simple mode, font weight setting information corresponding to the simple mode, and adjusting, based on the font weight setting information corresponding to the simple mode, the font in the display interface of the application.

7. The font adjustment method according to claim 1, further comprising, subsequent to said obtaining the application currently running on the electronic device:
determining whether the application is a predetermined application; and
performing, in response to determining that the application is not the predetermined application, said determining the display type of the application from the predetermined correspondence relation.

8. A font adjustment apparatus, comprising:
an obtaining module configured to obtain an application currently running on an electronic device;
a first determining module configured to determine a display type of the application based on a predetermined correspondence relation between part or all of applications in the electronic device and corresponding display types;
a second determining module configured to determine font weight setting information of the display type; and
an adjusting module configured to adjust, based on the font weight setting information, a font in a display interface of the application.

9. The font adjustment apparatus according to claim 8, wherein the font weight setting information comprises body font weight setting information and title font weight setting information, and wherein the adjusting module comprises:
a division sub-module configured to divide writing in the display interface of the application into a body and a title; and
an adjusting sub-module configured to: adjust a font of the body based on the body font weight setting information, and adjust a font of the title based on the title font weight setting information.

10. The font adjustment apparatus according to claim 9, wherein the division sub-module is configured to:
obtain a label of the writing in the display interface of the application; and
divide, based on the label, the writing in the display interface into the body and the title.

11. The font adjustment apparatus according to claim 8, further comprising:
a receiving module configured to, after the font in the display interface of the application is adjusted by the adjusting module based on the font weight setting information: receive a user operation, and select, based on the user operation, a target text in the display interface of the application; and
a setting module configured to increase a font weight value of the target text by a first value.

12. The font adjustment apparatus according to claim 8, further comprising:
a first judgement module configured to, after the font in the display interface of the application is adjusted by the adjusting module based on the font weight setting information: determine whether the electronic device is switched to a dark mode; and
a first processing module configured to, when the first judgement module determines that the electronic device is switched to the dark mode: reduce a font weight value of writing in the display interface of the application by a second value.

13. The font adjustment apparatus according to claim 8, further comprising:
a second judgement module configured to, after the font weight setting information of the display type is determined by the second determining module, determine whether the electronic device is switched to a simple mode,
wherein the adjusting module is configured to:
adjust, when the second judgement module determines that the electronic device is not switched to the simple mode, the font in the display interface of the application based on the font weight setting information of the display type; and
determine, when the second judgement module determines that the electronic device is switched to the simple mode, font weight setting information corresponding to the simple mode, and adjust, based on the font weight setting information corresponding to the simple mode, the font in the display interface of the application.

14. The font adjustment apparatus according to claim 8, wherein the first determining module is configured to, after the application currently running on the electronic device is obtained:
determine whether the application is a predetermined application; and
determine, when it is determined that the application is not the predetermined application, the display type of the application from the predetermined correspondence relation.

15. A storage medium, having a computer program stored thereon, wherein the computer program, when running on a computer, causes the computer to execute the font adjustment method according to any one of claims 1 to 7.

16. An electronic device, comprising:
a processor; and
a memory having a plurality of instructions stored thereon,
wherein the processor is configured to, by loading the plurality of instructions in the memory, implement steps of:
obtaining an application currently running on an electronic device;
determining a display type of the application based on a predetermined correspondence relation between part or all of applications in the electronic device and corresponding display types;
determining font weight setting information of the display type; and
adjusting, based on the font weight setting information, a font in a display interface of the application.

17. The electronic device according to claim 16, wherein the font weight setting information comprises body font weight setting information and title font weight setting information, and wherein the processor is configured to, during said adjusting, based on the font weight setting information, the font in the display interface of the application, implement steps of:
dividing writing in the display interface of the application into a body and a title;
adjusting a font of the body based on the body font weight setting information; and
adjusting a font of the title based on the title font weight setting information.

18. The electronic device according to claim 16, wherein the processor is further configured to, subsequent to said adjusting, based on the font weight setting information, the font in the display interface of the application, implement steps of:
receiving a user operation, and selecting, based on the user operation, a target text in the display interface of the application; and
increasing a font weight value of the target text by a first value.

19. The electronic device according to claim 16, wherein the processor is further configured to, subsequent to said adjusting, based on the font weight setting information, the font in the display interface of the application, implement steps of:
determining whether the electronic device is switched to a dark mode; and
reducing, in response to determining that the electronic device is switched to the dark mode, a font weight value of writing in the display interface of the application by a second value.

20. The electronic device according to claim 16, wherein the processor is further configured to, subsequent to said determining the font weight setting information of the display type, implement steps of:
determining whether the electronic device is switched to a simple mode;
adjusting, in response to determining that the electronic device is not switched to the simple mode, the font in the display interface of the application based on the font weight setting information of the display type; and
determining, in response to determining that the electronic device is switched to the simple mode, font weight setting information corresponding to the simple mode, and adjusting, based on the font weight setting information corresponding to the simple mode, the font in the display interface of the application.
